# EUROPEAN PATENT SPECIFICATION

(11) **EP 0 407 019 B1**
(45) Date of publication and mention of the grant of the patent: **17.04.1996**
(21) Application number: 90305321.3
(22) Date of filing: 17.05.1990
(51) Int. Cl.: A23G 3/30

(54) **Reduced-calorie saliva stimulating chewing gums, center-filled chewing gums, and confectionery coated chewing gums and method for preparing same**
Kalorienarme speichelstimulierende Kaugummis, gefüllte Kaugummis und beschichtete Kaugummis und Verfahren zur Herstellung
Chewing-gums à teneur réduite en calorie pour stimuler la salivation chewing-gums fourrés et chewing-gums enrobés ainsi que leur procédé de fabrication

(30) Priority: 07.07.1989 US 377494; 07.07.1989 US 376945
(43) Date of publication of application: 09.01.1991
(73) Proprietor: WARNER-LAMBERT COMPANY, Morris Plains New Jersey 07950 (US)
(72) Inventor: Cherukuri, Subraman R., Towaco, New Jersey 07082 (US); Faust, Steven M., Stanhope, New Jersey 078742 (US); Mansukhani, Gul, Staten Island, New York 10312 (US); Bilka, Kenneth P., Floral Park, New York 11001 (US)
(74) Representative: Bond, Bentley George

(56) References cited:
- EP-A- 0 082 670
- EP-A- 0 086 856
- EP-A- 0 271 445
- GB-A- 2 177 587
- US-A- 4 088 788
- US-A- 4 156 740
- US-A- 4 241 091
- US-A- 4 316 915

## Description

### BACKGROUND OF THE INVENTION

### 1. Field of the Invention

This invention pertains to reduced-calorie chewing gum compositions comprising a gum base having an enhanced hydrophilic nature. In one embodiment, the invention pertains to saliva stimulating chewing gums comprising a gum base having an enhanced hydrophilic nature and a saliva stimulating hydrophilic polymer in an anhydrous carrier. In another embodiment, the invention pertains to center-filled chewing gums wherein the outer shell comprises a gum base having an enhanced hydrophilic nature. In yet another embodiment, the invention pertains to confectionery coated chewing gums wherein the center portion comprises a gum base having an enhanced hydrophilic nature. In other embodiments, the invention pertains to saliva-stimulating center-filled chewing gums and saliva-stimulating confectionery coated chewing gums. The improved chewing gum compositions may be used to prepare a wide variety of reduced-calorie gum products. The present invention also pertains to methods for preparing the improved reduced-calorie chewing gum compositions.

### 2. Description of the Prior Art

Chewing gum compositions typically contain a water-insoluble chewable gum base, a bulking agent, and other additives such as a sweetening agent and a flavoring agent. Usually the gum base also contains plasticizers or softeners to improve the consistency and texture of the gum. The bulking agent generally comprises water-soluble sweeteners such as sucrose or corn syrup or, in sugarless gums, sorbitol and mannitol together with an artificial sweetener.

Reduced-calorie chewing gum compositions are well known in the art. Reduced-calorie chewing gums generally contain about 25% of a water-insoluble gum base, about 40% to about 90% of a bulking agent (filler or texturizing agent), a water-soluble flavoring agent, and water-soluble sweetening agents such as sucrose and corn syrup in sugar gums, and sorbitol, mannitol and intense sweeteners in sugarless gums. The gum base may also contain plasticizers or softeners to improve the consistency and texture of the gum.

One approach to prepare a reduced-calorie gum involves replacing the soluble sugar and sugar alcohol bulking agents with low calorie alternatives such as inert fillers and texturizing agents. Gums prepared in this manner generally have poor texture because the sugar and sugar alcohol bulking agents not only impart sweetness but also provide a discontinuity to the gum base which results in a softer more pleasant mouth feel.

Another approach to prepare a reduced-calorie gum involves using a high gum base-low bulking agent chewing gum composition. Gums of this type generally have poor texture and have a hard, tight, rubbery chew. Furthermore because carbohydrates (bulking agents) promote salivation, these high base gums usually do not stimulate saliva formation and are not juicy.

Saliva stimulating chewing gum compositions are known in the art. These gums contain a saliva stimulating agent which is usually an organic acid derived from natural products such as fruits, vegetables, plants, and milk. To stimulate saliva formation, these acids must be present in high concentrations, generally above about 3% by weight. The high concentration of these acids produces a perceptible sour taste.

United States patent no. 4,698,223, issued to Perfetti et al. and assigned to Gum Base Co., SPA, discloses a no-calorie chewing gum composition which comprises from 92% to 99% of a gum base, up to 4% of glycerol, and up to 3% of a flavoring agent. The gum base comprises from 8% to 15% of an elastomer, from 10% to 30% of a hydrogenated or partially hydrogenated animal or vegetable oil, from 10% to 39% of an inert mineral filler, from 8% to 25% of polyvinyl acetate, from 4% to 9% of fatty acid glycerides, from 15% to 25% of resins, from 2% to 6% of natural gum, from 4% to 12% of wax and up to 0.05% of antioxidants.

United States patent no. 4,088,788, issued to Ream et al. and assigned to Wm. Wrigley Jr. Company, discloses saliva stimulating chewing gum compositions comprising a gum base, a sweetening agent, a flavoring agent and a combination of at least 3% of an organic acid together with at least 0.01% to 0.3% of saccharin to promote salivation.

United States patent no. 4,151,270, issued to Ream et al. and assigned to Wm. Wrigley Jr. Company, discloses saliva stimulating chewing gum compositions comprising a gum base, a sweetening agent, a flavoring agent and a combination of at least 3% of an organic acid together with at least 10% of fructose to promote salivation.

United States patent no. 4,241,091, issued to Stroz et al. and assigned to Life Savers, Inc., discloses a non-adhesive chewing gum composition which comprises a gum base, a non-caloric sweetening agent, a flavoring agent, water, a thickening agent, a filler, a softening agent and a slip agent. The thickening agent may be sodium carboxymethyl cellulose.

United States patent no. 4,252,830, issued to Kehoe et al. and assigned to Life Savers, Inc., discloses a calorie-free chewing gum base which contains high levels of inert fillers, a softening agent, a non-caloric sweetening agent, and a flavoring agent. The gum base may also contain a plasticizer which may be sodium carboxymethyl cellulose.

Center-filled chewing gum compositions are known in the art. In general, such gums consist of an outer shell having a chewing gum composition enclosing a cavity containing a liquid center-fill which contains various additives such as flavoring agents, sweetening agents, and the like.

Maintaining the integrity of the liquid center and solid outer shell is a frequently encountered problem with center-filled chewing gum compositions during storage. One stability problem with center-filled chewing gum compositions is that on storage the liquid center tends to be absorbed by, or migrates into, the solid outer shell which results in a gum composition which has a softer outer shell and a reduced liquid center. A stability second problem with center-filled chewing gum compositions is that on storage ambient moisture is absorbed into the outer shell causing the outer shell to soften. Attempts to improve the storage stability of center-filled chewing gums have focused mainly on modifying the composition, and minimizing the aqueous content, of the liquid center to retard migration and absorption of the liquid into the outer shell. In general, only small amounts of a liquid center (up to about 20% by weight) have been incorporated into center-filled chewing gums.

United States patent no. 3,894,154, issued to Graff et al. and assigned to Warner-Lambert Company, discloses a center-filled chewing gum which contains an aqueous liquid center containing a water-miscible humectant such as glycerin to reduce the moisture content of the center and to thereby retard an increase in viscosity of the liquid center.

United States patent no. 4,156,740, issued to Glass et al. and assigned to Warner-Lambert Company, discloses a sugarless center-filled chewing gum which contains an aqueous liquid center containing a natural or synthetic gum such as carboxymethyl cellulose to bind the water in the liquid center.

United States patent no. 4,157,402, issued to Ogawa et al. and assigned to Lotte Co., Ltd., discloses a center-filled chewing gum which contains an aqueous liquid center containing an emulsifier to bind the flavor oils and water thereby reducing separation and migration of the center.

United States patent no. 4,316,915, issued to Friello et al. and assigned to Life Savers, Inc., discloses a center-filled chewing gum which contains a liquid center containing a thickener such as carboxymethyl cellulose in substantially all glycerin to retard migration of the liquid center into the outer shell.

United States patent no. 4,466,983, issued to Cifrese et al. and assigned to Warner-Lambert Company, discloses a center-filled chewing gum which contains a liquid center containing a mixture of hydrogenated starch hydrolysates, sorbitol solution, glycerin and optionally a flavoring agent, wherein the total water content of the liquid center is about 5% or less.

Confectionery coated chewing gum compositions are known in the art. In general, such coated or pellet gums consist of a center portion or core having a chewing gum composition which is covered by a confectionery outer coating. The center or inner portion of the composition is usually a soft chewing gum and the outer coating is crispy and crunchy. The center portion and confectionery coating may be sugar or sugarless. Generally, the chewing gum center portion must be conditioned prior to coating to insure that the outer coating will adhere uniformly to the chewing gum center.

A commonly noted problem with chewing gums, especially confectionery coated chewing gums, is the tendency for certain gums to lose moisture during storage which results in the chewing gum product becoming inelastic resulting in a brittle and crumbly or "stale" product. Other gums tend to absorb moisture under humid conditions and become soft and sticky and more difficult to coat with a confectionery coating. Gums having traditional gum base and bulking agent content are subject to the heat, humidity and air flow generated during the coating process. Nonstaling gums are usually formulated to exclude moisture or entrap the moisture in the gum base. These gums are generally prepared using humectants to soften the gum. These humectants tend to be hygroscopic causing the gum to absorb up to about 30% moisture on storage which results in the gum product losing its firmness.

United States patent no. 4,514,422, issued to Yang et al. and assigned to Warner-Lambert Company, discloses a gum composition having improved resistance to staling comprising a substantially anhydrous mixture of a gum base, at least one sugar alcohol, and glycerin, wherein the gum composition contains no greater than 2% by weight of water. Gum products made according to this invention are generally softer but absorb significant amounts of moisture, up to about 35%.

United States patent no. 4,753,806, issued to Carroll et al. and assigned to Nabisco Brands, Inc., discloses a soft flexible gum composition containing a gum base, a sweetening agent, and about 10%-30% of a cooked hydrogenated starch hydrolysate having a moisture content from about 4% to about 12%.

United States patent no. 4,166,134, issued to Witzel et al. and assigned to Life Savers, Inc., discloses a method for improving the flexibility retention of a chewing gum composition which comprises incorporating an aqueous softener in a gum base, admixing a sweetener to the gum base-softener mixture, and thereafter admixing a humectant into the mixture. The moisture is entrapped in the gum base and is separated from the humectant to decrease staleness.

United States patent no. 4,581,234, issued to Cherukuri et al. and assigned to Warner-Lambert Company, discloses a chewing gum composition having improved resistance to staling comprising a chewing gum having a moisture content of up to about 0.3% wherein the gum has an equilibrium relative humidity value lower than the ambient relative humidity.

United States patent no. 4,587,125, issued to Cherukuri et al. and assigned to Warner-Lambert Company, discloses a chewing gum composition having improved resistance to staling comprising a chewing gum having a moisture content of up to about 0.9% wherein the gum has an equilibrium relative humidity value lower than the ambient relative humidity.

United States patent no. 4,579,738, issued to Cherukuri et al. and assigned to Warner-Lambert Company, discloses a gum composition having improved resistance to becoming stale comprising a soft gum base, a solid water-soluble natural sweetening agent and a flavoring agent absorbed into the microchannels of an edible food material. No humectants or other moisture containing ingredients are used and the gum composition has a moisture content of up to about 0.9%, by weight of the final composition.

EP-A-0271445 discloses a chewing gum base composition containing in weight percent about 0.5 to about 20% of elastomer, about 10% to about 25% of a polyvinyl acetate having a medium molecular weight of about 35,000 to 50,000, about 4.5% to about 10.0% of acetylated monoglyceride, about 6% to about 10% of a wax having a melting point below about 60°C, and remaining amounts of material selected from elastomer solvent, emulsifiers, plasticizers, fillers and mixtures thereof.

EP-A-0082670 discloses a gum composition exhibiting improved shelf life and resistance to staling, and which comprises a substantially anhydrous mixture of a gum base, at least one sugar alcohol, and glycerin, the glycerin being present in an amount ranging from about 8% to about 18% by weight of the composition. The gum composition preferably contains no more than 2% by weight of water.

While the above compositions provide saliva stimulating chewing gums, center-filled chewing gums and confectionery coated chewing gums having improved qualities, none of the above compositions is entirely satisfactory. Accordingly, it would be commercially advantageous to provide a reduced-calorie saliva stimulating chewing gum which has a soft chew texture, a center-filled chewing gum which can be used with a variety of liquid centers, and a confectionery coated chewing gum which may be used with a wide variety of confectionery coatings. The present invention provides such improved reduced-calorie chewing gums. In particular, the present invention provides a reduced-calorie saliva stimulating chewing gum which has a soft chew texture without a high filler and organic acid content, a center-filled chewing gum which has an improved outer shell which may be used with a wide variety of liquid center-fills and which can encapsulate a substantially all aqueous liquid center, and a confectionery coated chewing gum which has an improved center with increased resistance to staling and reduced moisture absorption properties. The present invention also pertains to methods for preparing the improved reduced-calorie saliva stimulating chewing gums, center-filled chewing gums and confectionery chewing gums and the improved chewing gum products in which they may be employed.

### SUMMARY OF THE INVENTION

The present invention provides a reduced-calorie saliva stimulating chewing gum composition which comprises:

(A) a gum base present in an amount from 40% to 75%, by weight of the chewing gum composition, which comprises:
   (a) an elastomer present in an amount from 0.5% to 20%, by weight of the gum base;
   (b) a medium molecular weight polyvinyl acetate polymer having a molecular weight from 35,000 to 55,000 present in an amount from 10% to 25%, by weight of the gum base;
   (c) an acetylated monoglyceride present in an amount from 4.5% to 10%, by weight of the gum base;
   (d) a wax having a melting point below 60°C present in an amount from 6% to 10%, by weight of the gum base; and
   (e) a material selected from the group consisting of elastomer solvents, emulsifiers, plasticizers, fillers, and mixtures thereof, present in an amount to bring the total amount of gum base to 100%, by weight of the gum base;
(B) a bulking agent present in an amount up to 60%, by weight of the chewing gum composition; and
(C) an effective amount of a sweetening agent; characterised in that the composition further comprises:
(D) a homogeneous mixture of a hydrophilic polymer present in an amount of at least 1.5%, by weight of the chewing gum composition, in an anhydrous carrier, wherein the hydrophilic polymer is selected from the group consisting of cellulose, sodium carboxymethyl cellulose, gum arabic, carrageenan, and mixtures thereof.

In an embodiment, the invention pertains to a center-filled chewing gum composition having an outer shell enclosing a cavity and a liquid center within the cavity, wherein the outer shell comprises the gum base having an enhanced hydrophilic nature. In yet another embodiment, the invention pertains to a confectionery coated chewing gum composition having a center portion and a confectionery coating over the center portion wherein the center portion comprises the reduced-calorie gum base having an enhanced hydrophilic nature. In other embodiments, the invention pertains to a reduced-calorie saliva-stimulating center-filled chewing gum and a reduced-calorie saliva-stimulating confectionery coated chewing gum.

### BRIEF DESCRIPTION OF THE DRAWINGS

Figure 1 depicts in graphic format the juiciness intensity, on a scale of 0 to 100 versus time, of the chewing gum compositions of examples 1-3.

Figure 2 depicts in graphic format the moisture absorption, in percentage moisture absorbed by weight versus weeks of storage, of the chewing gum composition of examples 4-5 (controls) and examples 6-10 (test samples) at 27°C and 80% R.H.

Figure 3 depicts in graphic format the moisture absorption, in percentage moisture absorbed by weight versus weeks of storage, of the chewing gum compositions of example 15 (control) and examples 16-17 (test samples) at 27°C and 80% R.H.

Figure 4 depicts in graphic format the relative degree of hardness, versus storage time at 23°C and 23% relative humidity, of the chewing gum composition of example 15 (control) and examples 16-17 (test samples).

### DETAILED DESCRIPTION OF THE INVENTION

The present invention pertains to reduced-calorie chewing gum compositions comprising a gum base having an enhanced hydrophilic nature. The invention pertains to a reduced-calorie saliva stimulating chewing gum composition which comprises (A) a gum base having an enhanced hydrophilic nature present in an amount from about 40% to about 75%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier. In an embodiment, the invention pertains to a center-filled chewing gum composition having an outer shell enclosing a cavity and a liquid center within the cavity, wherein the outer shell comprises the gum base having an enhanced hydrophilic nature. In yet another embodiment, the invention pertains to a confectionery coated chewing gum composition having a center portion and a confectionery coating over the center portion wherein the center portion comprises the reduced-calorie gum base having an enhanced hydrophilic nature. In other embodiments, the invention pertains to a reduced-calorie saliva-stimulating center-filled chewing gum and a reduced-calorie saliva-stimulating confectionery coated chewing gum.

The gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

In a preferred embodiment, the gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, (e) an elastomer solvent present in an amount from about 2% to about 11%, by weight of the gum base, (f) a plasticizer in an amount from about 5% to about 14%, by weight of the gum base, (g) a filler in an amount from about 15% to about 40%, by weight of the gum base.

As used herein, the term "reduced-calorie composition" means a composition having a caloric value two thirds or less than that of a conventional composition. The term "tight" or "rubbery" chew refers to a chewing gum composition which requires a large amount of muscular chewing effort to masticate or to a composition which provides a gum bolus with high elasticity and bounce and which is difficult to deform.

Applicants have discovered a gum base containing a low melting point wax which does not require a high level of bulking agent to plasticize the gum base and render it soft during chewing. The novel gum base may be used at higher than normal levels in chewing gum compositions in place of a bulking and/or a sweetening agent to prepare high base-low bulking agent reduced-calorie gums which do not have rubbery or tight chew characteristics. The improved gum base possesses increased hydrophilic properties over conventional gum bases and appears to increase in size during chewing releasing flavoring and sweetening agents which would normally be entrapped in the gum base while maintaining a soft chew texture. Reduced-calorie chewing gum compositions prepared with the inventive high base-low bulking agent composition are less hygroscopic (have lower moisture-pickup) and are less prone to becoming stale than conventional reduced-calorie gum compositions while having comparable firmness and texture.

Applicants have also discovered that the presence of a hydrophilic polymer in an anhydrous carrier in a high gum base-low bulking agent gum composition provides a reduced-calorie gum having a pleasant saliva stimulating effect without a sour taste useful in the treatment of xerostomia.

In addition, center-filled chewing gum compositions employing the gum base having an enhanced hydrophilic nature, either alone or in a high gum base-low bulking agent gum composition, in the outer shell show greatly improved stability during storage. While the invention is not to be limited to theoretical considerations, applicants believe that outer shells comprising the gum base having an enhanced hydrophilic nature have increased hydrophobic character which resist absorption of the liquid center into the outer shell. At the same time, the hydrophobic film, which is low in bulking agent (carbohydrate) content, prevents ambient moisture from being absorbed by the outer shell and the liquid center causing the center to crystallize. Center-filled chewing gum compositions prepared with the high base-low bulking agent outer shell composition are less hygroscopic (have lower moisture-pickup) and are less prone to becoming stale than conventional center-filled gum compositions while having comparable firmness and texture. Moreover, significantly greater amounts of liquid centers, as well as liquid centers containing greater amounts of water, may be formulated in the center-filled gum compositions.

Furthermore, confectionery coated chewing gum compositions employing the gum bases having an enhanced hydrophilic nature, either alone or in a high gum base-low bulking agent gum composition, in the center portion of the gum have increased resistance to staling and reduced moisture absorption properties during storage. While the invention is not to be limited to theoretical considerations, applicants believe that center portions comprising gum bases having an enhanced hydrophilic nature entrap the ingredients in the base. Moisture, if present, cannot readily move through the center portion. At the same time, the hydrophobic core, which contains smaller amounts of the hygroscopic components such as bulking agents (carbohydrates) and humectants than conventional cores, does not readily absorb ambient moisture. Hence, confectionery coated chewing gum compositions prepared with the inventive high base-low bulking agent core composition are less hygroscopic and are less prone to becoming stale than conventional confectionery coated gums while having comparable firmness and texture.

The elastomers (rubbers) employed in the gum base of the present invention will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene-butadiene copolymers (SBR), polyisobutylene, isobutylene-isoprene copolymers, polyethylene, and the like, and mixtures thereof.

The amount of elastomer employed in the gum base will vary greatly depending upon various factors such as the type of gum base used, the consistency of the gum composition desired and the other components used in the composition to make the final chewing gum product. In general, the elastomer will be present in the gum base in an amount from about 0.5% to about 20%, and preferably from about 2.5% to about 15%, by weight of the gum base.

The polyvinyl acetate polymer employed in the gum base of the present invention is a polyvinyl acetate polymer having a medium molecular weight, specifically, having a mean average molecular weight in the range from about 35,000 to about 55,000. This medium molecular weight polyvinyl acetate polymer will preferably have a viscosity from about 35 seconds to about 55 seconds (ASTM designation D1200-82 using a Ford cup viscometer procedure). The medium molecular weight polyvinyl acetate polymer will be present in the gum base in an amount from about 10% to about 25%, and preferably from about 12% to about 27%, by weight of the gum base.

The medium molecular weight polyvinyl acetate polymer may also be blended with a low molecular weight polyvinyl acetate polymer. The low molecular weight polyvinyl acetate polymer will have a mean average molecular weight in the range from about 12,000 to about 16,000. This low molecular weight polyvinyl acetate polymer will preferably have a viscosity from about 14 seconds to about 16 seconds (ASTM designation D1200-82 using a Ford cup viscometer procedure). The low molecular weight polyvinyl acetate polymer will be present in the gum base in an amount up about 17%, and preferably from about 12% to about 17%, by weight of the gum base.

When a low molecular weight polyvinyl acetate polymer is blended with a medium molecular weight polyvinyl acetate polymer, the polymers will be present in a mole ratio from about 1:0.5 to about 1:1.5, respectively.

The medium molecular weight polyvinyl acetate polymer may also be blended with a high molecular weight polyvinyl acetate polymer. The high molecular weight polyvinyl acetate polymer will have a mean average molecular weight in the range from about 65,000 to about 95,000. The high molecular weight polyvinyl acetate polymer will be present in the gum base in an amount up to about 5%, by weight of the gum base.

The acetylated monoglycerides in the present invention, like the polyvinyl acetate polymer, serve as plasticizing agents. While the saponification value of the acetylated monoglycerides is not critical, preferable saponification values are 278 to 292, 316 to 331, 370 to 380, and 430 to 470. A particularly preferred acetylated monoglyceride has a saponification value above about 400. Such acetylated monoglycerides generally have an acetylation value (percentage acetylated) above about 90 and a hydroxyl value below about 10 (Food Chemical Codex (FCC) III/P508 and the revision of AOCS).

The use of acetylated monoglycerides in the present gum base is preferred over the use of bitter polyvinyl acetate (PVA) plasticizers, in particular, triacetin. The acetylated monoglycerides will be present in the gum base in an amount from about 4.5% to about 10%, and preferably from about 5% to about 9%, by weight of the gum base.

The wax in the gum base of the present invention softens the polymeric elastomer mixture and improves the elasticity of the gum base. The waxes employed will have a melting point below about 60° C., and preferably between about 45° C. and about 55° C. A preferred wax is low melting paraffin wax. The wax will be present in the gum base in an amount from about 6% to about 10%, and preferably from about 7% to about 9.5%, by weight of the gum base.

In addition to the low melting point waxes, waxes having a higher melting point may be used in the gum base in amounts up to about 5%, by weight of the gum base. Such high melting waxes include beeswax, vegetable wax, candelilla wax, carnauba wax, most petroleum waxes, and the like, and mixtures thereof.

In addition to the components set out above, the gum base includes a variety of traditional ingredients, such as a component selected from the group consisting of elastomer solvents, emulsifiers, plasticizers, fillers, and mixtures thereof. These ingredients are present in the gum base in an amount to bring the total amount of gum base to 100%.

The gum base may contain elastomer solvents to aid in softening the elastomer component. Such elastomer solvents may comprise those elastomer solvents known in the art, for example, terpinene resins such as polymers of alpha-pinene or beta-pinene, methyl, glycerol and pentaerythritol esters of rosins and modified rosins and gums, such as hydrogenated, dimerized and polymerized rosins, and mixtures thereof. Examples of elastomer solvents suitable for use herein include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof. A preferred emulsifier is glyceryl monostearate. The emulsifier may be employed in amounts from about 2% to about 15%, and preferably from about 7% to about 11%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. The plasticizers and softeners are generally employed in the gum base in amounts up to about 20%, and preferably in amounts from about 9% to about 17%, by weight of the gum base.

Preferred plasticizers are the hydrogenated vegetable oils and include soybean oil and cottonseed oil which may be employed alone or in combination. These plasticizers provide the gum base with good texture and soft chew characteristics. These plasticizers and softeners are generally employed in amounts from about 5% to about 14%, and preferably in amounts from about 5% to about 13.5%, by weight of the gum base.

In another preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base of this invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, tricalcium phosphate, dicalcium phosphate, and the like, and mixtures thereof. These fillers or adjuvants may be used in the gum base compositions in various amounts. Preferably the amount of filler, when used, will be present in an amount from about 15% to about 40%, and preferably from about 20% to about 30%, by weight of the gum base.

A variety of traditional ingredients may be optionally included in the gum base in effective amounts such as coloring agents, antioxidants, preservatives, flavoring agents, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the gum base.

The gum base in the present invention comprises, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, and (e) a material selected from the group consisting of elastomer solvents, emulsifiers, plasticizers, fillers, and mixtures thereof, present in an amount to bring the total amount of gum base to 100%. Preferably, the gum base comprises, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, (e) an elastomer solvent present in an amount from about 2% to about 11%, (f) a plasticizer in an amount from about 5% to about 14%, and (g) a filler in an amount from about 15% to about 40%.

Once prepared, the inventive gum base having an enhanced hydrophilic nature may be stored for future use or may be used directly as the outer shell of a center-filled gum or as the center portion of a confectionery coated gum. The inventive gum base may also be formulated with conventional additives to prepare a wide variety of chewing gum compositions. The gum base may be used in sugar and sugarless chewing gum products.

In one embodiment, the invention is directed at a center-filled chewing gum composition having an outer shell enclosing a cavity and a liquified center within the cavity, wherein the outer shell comprises the gum base comprising, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, and (e) a material selected from the group consisting of elastomer solvents, emulsifiers, plasticizers, fillers, and mixtures thereof, present in an amount to bring the total amount of gum base to 100%. Preferably, the gum base of the center-filled chewing gum comprises, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, (e) an elastomer solvent present in an amount from about 2% to about 11%, (f) a plasticizer in an amount from about 5% to about 14%, and (g) a filler in an amount from about 15% to about 40%.

In another embodiment, the invention is directed at a confectionery coated chewing gum composition having a center portion and a confectionery coating over the center portion wherein the center portion comprises a gum base comprising, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, and (e) a material selected from the group consisting of elastomer solvents, emulsifiers, plasticizers, fillers, and mixtures thereof, present in an amount to bring the total amount of gum base to 100%. More preferably, the gum base of the confectionery coated chewing gum comprises, in percentages by weight of the gum base, (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%, (e) an elastomer solvent present in an amount from about 2% to about 11%, (f) a plasticizer in an amount from about 5% to about 14%, and (g) a filler in an amount from about 15% to about 40%.

The present invention extends to methods of making the improved gum base compositions. The manner in which the gum base components are admixed is not critical and is performed using standard techniques and apparatus known to those skilled in the art. In a typical method, an elastomer is admixed with an elastomer solvent and/or a plasticizer and/or an emulsifier and agitated for a period of from 1 to 30 minutes. After blending is complete, the polyvinyl acetate component is admixed into the mixture. The medium molecular weight polyvinyl acetate is preferably admixed prior to addition of the optional low molecular weight polyvinyl acetate to prevent the creation of pockets of polyvinyl acetate within the elastomer mixture. The remaining ingredients, such as the low melting point wax, are then admixed, either in bulk or incrementally, while the gum base mixture is blended again for 1 to 30 minutes.

In a preferred embodiment, the invention is directed to a method for preparing a gum base, which comprises the steps of (1) providing the following ingredients of the gum base in percentages by weight (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6 to about 10%, and (e) a component selected from the group consisting of elastomer solvents, emulsifiers, plasticizers, fillers, and mixtures thereof, present in an amount to bring the total amount of gum base to 100%, and (2) admixing the ingredients in step (1) to form a uniform mixture.

In another preferred embodiment, the invention is directed to a method for preparing an outer shell in a center-filled chewing gum composition, wherein the outer shell is comprised of a gum base, which comprises the steps set out above for preparing a gum base. In yet another preferred embodiment, the invention is directed to a method for preparing a center portion in a confectionery coated chewing gum composition having a confectionery coating over the center portion, wherein the center portion is comprised of a gum base, which comprises the steps set out above for preparing a gum base.

In one embodiment of the invention, the gum base having an enhanced hydrophilic nature is used as the outer shell of a center-filled chewing gum. In general, the liquid center will be present in the center-filled chewing gum in an amount from about 15% to about 50%, and preferably from about 20% to about 35%, by weight of the final chewing gum product. Sweetening agents, flavoring agents, and the like, as set out below, may be included in the center-filled portion of the gum.

In another embodiment of the invention, the gum base having an enhanced hydrophilic nature is used as the center portion of a confectionery coated chewing gum. The center portion is present in an amount from about 25% to about 95%, by weight of the gum composition. Sweetening agents, flavoring agents, and the like, as set out below, may be included in the outer confectionery coating portion of the gum.

The present invention extends to methods of making the improved gum base compositions. In one embodiment, the invention is directed at a method for preparing an outer shell in a center-filled chewing gum composition, wherein the outer shell is comprised of a gum base having an enhanced hydrophilic nature, which comprises the steps of (1) providing the ingredients of the gum base having an enhanced hydrophilic nature, and (2) admixing the ingredients in step (1) to form a uniform mixture. In another embodiment, the invention is directed at a method for preparing a center portion in a confectionery coated chewing gum composition having a confectionery coating over the center portion, wherein the center portion is comprised of a gum base having an enhanced hydrophilic nature, which comprises the steps of (1) providing the ingredients of the gum base having an enhanced hydrophilic nature, and (2) admixing the ingredients in step (1) to form a uniform mixture.

In another embodiment of the invention, the gum base having an enhanced hydrophilic nature is formulated with additives such as a bulking agent, a sweetening agent, a flavoring agent, and the like, to form a chewing gum composition. The chewing gum composition may be used as the outer shell of a center-filled chewing gum, the center portion of a confectionery coated chewing gum or may be formulated with a homogeneous mixture of a hydrophilic polymer present in an amount of at least about 1.5% in an anhydrous carrier to provide saliva stimulating chewing gums according to the present invention. Chewing gum compositions containing the gum base having an enhanced hydrophilic nature and saliva stimulating agents of the present invention may also be used as the outer shell of a center-filled chewing gum or the center portion of a confectionery coated chewing gum. Additional sweetening agents, flavoring agents, and the like, may be included in the confectionery coating portion of the confectionery coated gum or the liquid fill center portion of the center-filled chewing gum.

The gum base will be present in the chewing gum composition in an amount from about 40% to about 75%, and preferably from about 50% to about 65%, by weight of the chewing gum composition. For center-filled gums, the gum base will be present in the chewing gum composition in an amount from about 40% to about 75%, and preferably from about 50% to about 65%, by weight of the chewing gum composition.

The gum composition may include effective amounts of conventional additives selected from the group consisting of sweetening agents (sweeteners), plasticizers, softeners, emulsifiers, waxes, fillers, bulking agents (carriers, extenders), mineral adjuvants, flavoring agents (flavors, flavorings), coloring agents (colorants, colorings), antioxidants, acidulants, thickeners, and the like, and mixtures thereof. These ingredients are present in the chewing gum composition in an amount to bring the total amount of chewing gum composition to 100%. Some of these additives may serve more than one purpose. For example, in sugarless gum compositions, a sweetener, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

The hydrophilic polymers which are employed in the present invention to stimulate saliva have a strong affinity for binding, or absorbing water, and swell and form reversible gels. The hydrophilic polymers are selected from the group consisting of cellulose, sodium carboxymethyl cellulose, gum arabic, carrageenan, and mixtures thereof. The preferred hydrophilic polymer is sodium carboxymethyl cellulose.

The hydrophilic polymers in the present invention are employed in amounts effective to promote salivation when chewed in a gum composition. The hydrophilic polymer will be present in the chewing gum composition in an amount of at least about 1.5%, preferably from about 1.5% to about 10%, and more preferably from about 2% to about 4%, by weight of the chewing gum composition.

The anhydrous carriers in the present invention are those carriers capable of dispersing the hydrophilic polymer so that the polymer can be admixed uniformly into the chewing gum composition. Useful anhydrous carriers include, without limitation, glycerin, propylene glycol, oils, boiled corn syrups, boiled lycasin, and the like, and mixtures thereof. The preferred anhydrous carriers are selected from the group consisting of glycerin, propylene glycol, and mixtures thereof. The most preferred anhydrous carrier is glycerin.

The anhydrous carriers in the present invention are employed in amounts effective to disperse the hydrophilic polymer. In general, the anhydrous carrier will be present in the chewing gum composition in an amount from about 1% to about 20%, preferably from about 5% to about 12%, and more preferably from about 7% to about 9%, by weight of the chewing gum composition.

The bulking agents (carriers, extenders), in the present invention may be water-soluble and include sweetening agents selected from the group consisting of, but not limited to, monosaccharides, disaccharides, polysaccharides, sugar alcohols, and mixtures thereof; randomly bonded glucose polymers such as those polymers distributed under the tradename POLYDEXTROSE by Pfizer, Inc., Groton, Connecticut; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; hydrogenated disaccharides; minerals, such as calcium carbonate, talc, titanium dioxide, dicalcium phosphate, celluloses and the and the like, and mixtures thereof. Bulking agents may be used in amounts up to about 60%, and preferably in amounts from about 25% to about 60%, by weight of the chewing gum composition.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof. Mixtures of sucrose and corn syrup solids are the preferred sugar bulking agents.

Suitable sugar alcohol bulking agents include sorbitol, xylitol, mannitol, galactitol, maltitol, and mixtures thereof. Mixtures of sorbitol and mannitol are the preferred sugar alcohol bulking agents.

Maltitol is a sweet, non-caloric, water-soluble sugar alcohol useful as a bulking agent in the preparation of non-caloric beverages and foodstuffs and is more fully described in United States patent no. 3,708,396, which disclosure is incorporated herein by reference. Maltitol is made by hydrogenation of maltose which is the most common reducing disaccharide and is found in starch and other natural products.

Suitable hydrogenated starch hydrolysates include those disclosed in United States patent nos. Re. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN, a commercially available product manufactured by Roquette Freres of France, and HYSTAR, a commercially available product manufactured by Lonza, Inc., of Fairlawn, New Jersey, are also useful.

The sweetening agents (sweeteners) used may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, glycyrrhizin, dihydroflavenol, and sugar alcohols such as sorbitol, mannitol, maltitol, and L-aminodicarboxylic acid aminoalkenoic acid ester amides, such as those disclosed in United States patent no. 4,619,834, which disclosure is incorporated herein by reference, and the like, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and the like, and mixtures thereof;
(c) dipeptide based sweeteners, such as L-aspartic acid derived sweeteners, such as L-aspartyl-L-phenylalanine methyl ester (Aspartame) and materials described in United States patent no. 3,492,131, L-alpha-aspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenylglycine, L-aspartyl-2,5-dihydro-L-phenylalanine; L-aspartyl-L-(1-cyclohexen)-alanine, and the like, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1′-deoxysucrose; 4-chloro-4-deoxy-alpha-D-galacto-pyranosyl-alpha-D-fructofuranoside, or 4-chloro-4-deoxygalactosucrose; 4-chloro-4-deoxy-alpha-D-galacto-pyranosyl-1-chloro-1-deoxy-beta-D-fructo-furanoside, or 4,1′-dichloro-4,1′-dideoxygalactosucrose; 1′,6′-dichloro-1′,6′-dideoxysucrose; 4-chloro-4-deoxy-alpha-D-galacto-pyranosyl-1,6-dichloro-1,6-dideoxy-beta-D-fructofuranoside, or 4,1′,6′-trichloro-4,1′,6′-trideoxygalacto-sucrose; 4,6-dichloro-4,6-dideoxy-alpha-D-galactopyranosyl-6-chloro-6-deoxy-beta-D-fructofuranoside, or 4,6,6′-trichloro-4,6,6′-trideoxygalactosucrose; 6,1′,6′-trichloro-6,1′,6′-trideoxysucrose; 4,6-dichloro-4,6-dideoxy-alpha-D-galacto-pyranosyl-1,6-dichloro-1,6-dideoxy-beta-D-fructofuranoside, or 4,6,1′,6′-tetrachloro-4,6,1′,6′-tetradeoxygalacto-sucrose; and 4,6,1′,6′-tetrachloro-4,6,1′,6′-tetradeoxy-sucrose, and mixtures thereof; and
(e) protein based sweeteners such as thaumaoccous danielli (Thaumatin I and II).

The intense sweetening agents of the present invention may be used in many distinct physical forms well known in the art to provide an initial burst of sweetness and/or a prolonged sensation of sweetness. Without being limited thereto, such physical forms include free forms, such as spray dried, powdered, and beaded forms, and encapsulated forms, and mixtures thereof.

In general, an effective amount of intense sweetener is utilized to provide the level of sweetness desired, and this amount will vary with the sweetener selected. The amount of intense sweetener will normally be present in amounts from about 0.001% to about 3%, by weight of the gum composition, depending upon the sweetener used. The exact range of amounts for each type of sweetener is well known in the art and is not the subject of the present invention.

In addition to the saliva stimulating agents of the present invention, organic acids may also be present in the gum to stimulate saliva formation. Suitable organic acids are selected from the group consisting of adipic acid, ascorbic acid, citric acid, fumaric acid, lactic acid, malic acid, tartaric acid, and mixtures thereof. Organic acids when used will be present in the gum in an amount from about 0.5% to about 10%, preferably from about 3% to about 10%, and more preferably from about 3% to about 6%, by weight of the chewing gum composition.

The gum composition may include effective amounts of conventional additives selected from the group consisting of plasticizers, softeners, emulsifiers, waxes, fillers, mineral adjuvants, flavoring agents (flavors, flavorings), coloring agents (colorants, colorings), antioxidants, acidulants, thickening agents, and the like, and mixtures thereof. These ingredients are present in the chewing gum composition in an amount to bring the total amount of chewing gum composition to 100%. Some of these additives may serve more than one purpose. For example, in sugarless gum compositions, a sweetener, such as sorbitol or other sugar alcohol, may also function as a bulking agent.

The plasticizers, softening agents, mineral adjuvants, waxes and antioxidants discussed above, as being suitable for use in the gum base, may also be used in the chewing gum composition. Examples of other conventional additives which may be used include emulsifiers, such as lecithin and glyceryl monostearate, thickening agents, used alone or in combination with other softeners, such as methyl cellulose, alginates, carrageenan, xanthan gum, gelatin, carob, tragacanth, and locust bean, acidulants such as malic acid, adipic acid, citric acid, tartaric acid, fumaric acid, and mixtures thereof, and fillers, such as those discussed above under the category of mineral adjuvants.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

The amount of flavoring agent employed herein is normally a matter of preference subject to such factors as the type of final chewing gum composition, the individual flavor, the gum base employed, and the strength of flavor desired. Thus, the amount of flavoring may be varied in order to obtain the result desired in the final product and such variations are within the capabilities of those skilled in the art without the need for undue experimentation. In gum compositions, the flavoring agent is generally present in amounts from about 0.02% to about 5%, and preferably from about 0.1% to about 2%, and more preferably, from about 0.8% to about 1.8%, by weight of the chewing gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the gum composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7%, and preferably up to about 3.5%, by weight of the gum composition.

In one embodiment, the invention is directed at a reduced-calorie saliva stimulating chewing gum composition which comprises (A) a gum base having an enhanced hydrophilic nature present in an amount from about 40% to about 75%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier. In another embodiment, the invention is directed at a center-filled chewing gum composition having an outer shell enclosing a cavity and a liquid center within the cavity, wherein the outer shell comprises a chewing gum composition comprising (A) a gum base having an enhanced hydrophilic nature present in an amount from about 40% to about 85%, by weight of the chewing gum composition, and (B) a bulking agent present in an amount up to about 60%, by weight of the chewing gum composition. In another embodiment, the invention is directed at a confectionery coated chewing gum composition having a center portion and a confectionery coating over the center portion wherein the center portion comprises a reduced-calorie chewing gum composition which comprises (A) a gum base having an enhanced hydrophilic nature present in an amount from about 40% to about 75%, by weight of the chewing gum composition, and (B) a bulking agent present in an amount up to about 60%, by weight of the chewing gum composition.

The gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base. The composition further comprises (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier. More preferably, the gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, (e) an elastomer solvent present in an amount from about 2% to about 11%, by weight of the gum base, (f) a plasticizer in an amount from about 5% to about 14%, by weight of the gum base, and (g) a filler in an amount from about 15% to about 40%, by weight of the gum base, and (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier.

The present invention also includes a method for preparing the improved chewing gum compositions, including both chewing gum and bubble gum formulations. The chewing gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a chewing gum composition is made by admixing the inventive gum base with the other ingredients of the final desired chewing gum composition. Other ingredients will usually be incorporated into the composition as dictated by the nature of the desired composition as well known by those having ordinary skill in the art. The ultimate chewing gum compositions are readily prepared using methods generally known in the food technology and chewing gum arts.

For example, the inventive gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under these conditions for a period of about thirty minutes just prior to being admixed incrementally with the remaining ingredients of the gum composition such as the plasticizer, the softener, the bulking agent, the sweetener, and/or fillers, coloring agents and flavoring agents to plasticize the blend as well as to modulate the hardness, viscoelasticity and formability of the base. The saliva stimulating agents of the present invention are also added at this point. Mixing is continued until a uniform mixture of gum composition is obtained. Thereafter the gum composition mixture may be formed into desirable chewing gum shapes.

In one embodiment, the invention is directed to a method for preparing a reduced-calorie saliva stimulating chewing gum composition which comprises the steps of (1) providing the following ingredients of the chewing gum composition (A) a gum base having an enhanced hydrophilic nature present in an amount from about 40% to about 75%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier, (2) admixing the ingredients in step (A) to form a uniform mixture, and (3) admixing the ingredients in steps (B), (C) and (D) to the mixture of step (2) to form a uniform mixture.

In another embodiment, the invention is directed to a method for preparing a reduced-calorie outer shell in a center-filled chewing gum composition, which comprises the steps of (1) providing the following ingredients of the chewing gum composition (A) a gum base having an enhanced hydrophilic nature present in an amount from about 40% to about 75%, by weight of the chewing gum composition, and (B) a bulking agent present in an amount up to about 60%, by weight of the chewing gum composition, (2) admixing the ingredients in step (A) to form a uniform mixture, and (3) admixing the ingredients in step (B) to the mixture of step (2) to form a uniform mixture.

In yet another embodiment, the invention is directed to a method for preparing a reduced-calorie center portion in a confectionery coated chewing gum composition having a confectionery coating over the center portion, wherein the center portion is comprised of a chewing gum composition, which comprises the steps of (1) providing the following ingredients of the chewing gum composition: (A) a gum base having an enhanced hydrophilic nature present in an amount from about 40% to about 75%, by weight of the chewing gum composition, and (B) a bulking agent present in an amount up to about 60%, by weight of the chewing gum composition, and (2) admixing the ingredients in step (A) to form a uniform mixture, and (3) admixing the ingredients in step (B) to the mixture of step (2) to form a uniform mixture.

The gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6 to about 10%, by weight of the gum base, and (e) a material selected from the group consisting of elastomer solvents, emulsifiers, plasticizers, fillers, and mixtures thereof, present in an amount to bring the total amount of gum base to 100%. Preferably, the gum base having an enhanced hydrophilic nature comprises (a) an elastomer present in an amount from about 0.5% to about 20% by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, (e) an elastomer solvent present in an amount from about 2% to about 11%, by weight of the gum base, (f) a plasticizer in an amount from about 5% to about 14%, by weight of the gum base, and (g) a filler in an amount from about 15% to about 40%, by weight of the gum base.

In accord with the present invention, gum bases having an enhanced hydrophilic nature and chewing gum compositions incorporating such gum bases may be used as the outer shell of a center-filled chewing gum enclosing a liquid center. The liquid center employed in this invention may be any liquid center well known in the art, including sugar and sugarless liquid centers. These liquid centers include, without limitation, substantially aqueous centers, aqueous centers containing additives such as thickeners, emulsifiers, humectants, binders, gums, and the like, and mixtures thereof to prevent migration of the liquid center, suspensions, and semi-liquid centers, wherein the viscosity of the liquid center can range from a gel-like consistency or pasty quality, to a relatively thixotropic, sticky liquid quality.

The liquid centers may contain those traditional ingredients well known in the chewing gum and confectionery arts such as flavoring agents, sweetening agents, and the like, and mixtures thereof. In addition to confectionery additives, the liquid centers may also contain pharmaceutical additives such as medicaments, breath fresheners, vitamins, fruit juices, and the like, and mixtures thereof. The confectionery and pharmaceutical agents may be used in many distinct physical forms well known in the art to provide an initial burst of sweetness and flavor and/or therapeutic activity or a prolonged sensation of sweetness and flavor and/or therapeutic activity. Without being limited thereto, such physical forms include free forms, such as spray dried, powdered, and beaded forms, and encapsulated forms, and mixtures thereof. Illustrative, but not limiting, examples of liquid centers suitable for use in the present invention include those centers disclosed in United States patents no. 3,894,154, 4,156,740, 4,157,402, 4,316,915, and 4,466,983, which disclosures are incorporated herein by reference.

Because of the increased hydrophobic properties of the outer shell in the present invention which retard migration of the liquid center, a significantly higher ratio of liquid center to solid outer shell may be incorporated into the center-filled chewing gums of this invention. The smaller amount of solid outer shell in the center-filled chewing gum product enables the preparation of reduced-calorie chewing gums. In general, the liquid center will be present in the center-filled chewing gum in an amount from about 15% to about 50%, and preferably from about 20% to about 35%, by weight of the final chewing gum product.

The present invention extends to methods of making the improved center-filled chewing gum compositions. The improved compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan. Such methods and apparatus are disclosed, for example, in United States patents no. 3,806,290 and 3,857,963, which disclosures are incorporated herein by reference.

Typically, the gum base of this invention, or a chewing gum composition incorporating the gum base of this invention, is fed into a gum extruder and extruded through an orifice as a hollow-centered rope of chewing gum. A liquid center formulation is fed, under pressure, through an inner conduit to the hollow-center of the rope downstream of the orifice and the center-filled rope of chewing gum is passed into a sizing unit where rollers decrease the cross sectional dimension of the rope gum and form individual gum units.

In a preferred embodiment, the invention is directed to a method for preparing a center-filled chewing gum composition which comprises enclosing a cavity containing a liquid center with an outer shell, wherein the outer shell comprises the gum base having an enhanced hydrophilic nature. In another preferred embodiment, the invention is directed to a method for preparing a center-filled chewing gum composition which comprises enclosing a cavity containing a liquid center with an outer shell, wherein the outer shell comprises a gum composition comprising (A) the gum base having an enhanced hydrophilic nature present in an amount from about 40% to about 75%, by weight of the chewing gum composition, and (B) a bulking agent present in an amount up to about 60%, by weight of the chewing gum composition.

The gum base having an enhanced hydrophilic nature comprises in percentages by weight (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6 to about 10%, and (e) a component selected from the group consisting of elastomer solvents, emulsifiers, plasticizers, fillers, and mixtures thereof, present in an amount to bring the total amount of gum base to 100%. Preferably, the gum base having an enhanced hydrophilic nature comprises in percentages by weight (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6 to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base, and (B) a bulking agent present in an amount up to about 60%, by weight of the chewing gum composition.

In accord with the present invention, the gum bases having an enhanced hydrophilic nature and chewing gum compositions incorporating such gum bases may be used as the center portion of a confectionery coated chewing gum. The confectionery coating employed in this invention may be any confectionery coating well known in the art, including sugar and sugarless confectionery coatings. These confectionery coatings may contain additives such as artificial sweeteners, flavoring agents, coloring agents, film-forming agents, plasticizers, binders, moisture absorbents, anti-sticking agents, dispersing agents, and the like, and mixtures thereof, to produce a uniform coating with good appearance and chew properties. Confectionery coated chewing gums are more fully disclosed, for example, in United States patent no. 4,753,790, which disclosure is incorporated herein by reference.

The sweetening agents, flavoring agents, and coloring agents set out above for the gum composition of the center portion of the gum may be employed in the confectionery coating. The sweetening and flavoring agents may be used in many distinct physical forms well known in the art to provide an initial burst of sweetness and flavor or a prolonged sensation of sweetness and flavor. Without being limited thereto, such physical forms include free forms, such as spray dried, powdered, and beaded forms, and encapsulated forms, and mixtures thereof.

Suitable film-forming agents include hydroxypropyl cellulose, methyl cellulose (methyl ether of cellulose), ethyl cellulose, hydroxypropyl methyl cellulose, hydroxyethyl cellulose, carboxymethyl cellulose, gelatin, and the like, and mixtures thereof. The film forming agents when used are present in an amount from about 0.01% to about 1%, by weight.

Plasticizers suitable for use are water-soluble. Examples of plasticizers include polyethylene glycol, polyvinylpyrrolidone, oligomers of polypropylene glycol (such as those having an average molecular weight from about 1000 to about 2000), polyvinyl alcohol, low molecular weight polyvinyl acetate (such as those having an average molecular weight from about 800 to about 1200), water-soluble natural gums such as alginates, xanthan gum, carrageenan, and agar agar, and the like, and mixtures thereof. The plasticizer may be used in an amount from about 0.2% to about 1%, by weight.

Binders suitable for use include gum arabic, xanthan gum, gum tragacanth, tapioca dextrin, modified food starch, zein, and the like, and mixtures thereof. Binders may be used in an amount from about 0.05% to about 0.3%, by weight.

Suitable moisture absorbents, when used, include mannitol, dicalcium phosphate, talc, magnesium stearate, calcium sulfate, silicas, and the like, and mixtures thereof. Suitable silicas useful as moisture absorbents include amorphous silicas, synthetic amorphous silicas, hydrous silica gels, synthetic silicas, sodium aluminum silicates, precipitated amorphous silicon dioxide of ultra fine particle size, and the like, and mixtures thereof. Usually the moisture absorbent is present in an amount from about 0.5% to about 3%, by weight.

Useful anti-sticking agents which may also function as a filler include calcium carbonate, talc, and magnesium trisilicate, and the like, and mixtures thereof. Useful dispersing agents include titanium dioxide, talc, and the anti-sticking agents set out above.

The present invention extends to methods of making the improved confectionery coated chewing gum compositions. The improved confectionery coated chewing gum compositions may be prepared using standard techniques and equipment known to those skilled in the art. The apparatus useful in accordance with the present invention comprises mixing, heating, coating (dusting) and drying apparatus well known in the chewing gum manufacturing arts, and therefore the selection of the specific apparatus will be apparent to the artisan.

In such a method, a composition is made by admixing the inventive sugarless, substantially anhydrous chewing gum composition as set out above with the other ingredients of the desired core portion composition. The homogeneous mixture is then formed into pieces which are then placed in a revolving coating pan. A confectionery coating syrup is prepared, with heating if necessary, and then applied to the gum pieces. The coated gum pieces are then allowed to cool and dry. Various ingredients will usually be incorporated into the confectionery coating composition as dictated by the nature of the desired composition as well known by those having ordinary skill in the art. The ultimate coated chewing gum compositions are readily prepared using methods generally known in the art of chewing gum technology such as, for example in United States patents no. 4,238,510 and 4,317,838, issued to Cherukuri et al., which disclosures are incorporated herein by reference.

In a preferred embodiment, the invention is directed to a method for preparing a confectionery coated chewing gum composition having a center portion and a confectionery coating over the center portion which comprises coating the center portion with the confectionery coating, wherein the center portion comprises the gum base having an enhanced hydrophilic nature. In another preferred embodiment, the invention is directed to a method for preparing a confectionery coated chewing gum composition having a center portion and a confectionery coating over the center portion which comprises coating the center portion with the confectionery coating, wherein the center portion comprises a gum composition comprising (A) the gum base having an enhanced hydrophilic nature present in an amount from about 40% to about 75%, by weight of the chewing gum composition, and (B) a bulking agent present in an amount up to about 60%, by weight of the chewing gum composition.

The gum base having an enhanced hydrophilic nature comprises in percentages by weight of the gum base (a) an elastomer present in an amount from about 0.5% to about 20%, (b) a medium molecular weight polyvinyl acetate polymer having a molecular weight from about 35,000 to about 55,000 present in an amount from about 10% to about 25%, (c) an acetylated monoglyceride present in an amount from about 4.5% to about 10%, (d) a wax having a melting point below about 60° C. present in an amount from about 6% to about 10%; and (e) a component selected from the group consisting of elastomer solvents, emulsifiers, plasticizers, fillers, and mixtures thereof, present in an amount to bring the total amount of gum base to 100%. Preferably, the gum base having an enhanced hydrophilic nature comprises in percentages by weight of the gum base (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) an elastomer solvent present in an amount from about 2% to about 11%, by weight of the gum base, (f) a plasticizer in an amount from about 5% to about 14%, by weight of the gum base, and (g) a filler in an amount from about 15% to about 40%, by weight of the gum base.

In accord with the present invention, reduced-calorie saliva stimulating center-filled chewing gum compositions may be prepared having an outer shell enclosing a cavity and a liquid center within the cavity, wherein the outer shell comprises a chewing gum composition comprising a gum base having an enhanced hydrophilic nature present in an amount from about 40% to about 85%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier. The invention also includes a method for preparing an outer shell in a reduced-calorie saliva stimulating center-filled chewing gum composition, wherein the outer shell is comprised of a chewing gum composition, which comprises the steps of (1) providing the following ingredients of the chewing gum composition (A) a gum base having an enhanced hydrophilic nature present in an amount from about 40% to about 85%, by weight of the chewing gum composition, and (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier, and (2) admixing the ingredients in step (A) to form a uniform mixture, and (3) admixing the ingredients in steps (B), (C) and (D) to the mixture of step (2) to form a uniform mixture.

The gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

In accord with the present invention, reduced-calorie saliva stimulating confectionery coated chewing gum composition having a center portion and a confectionery coating over the center portion wherein the center portion comprises a reduced-calorie chewing gum composition which comprises (A) the gum base having an enhanced hydrophilic nature present in an amount from about 40% to about 75%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier. The invention also includes a method for preparing a center portion in a reduced-calorie saliva stimulating confectionery coated chewing gum composition having a confectionery coating over the center portion, wherein the center portion is comprised of a chewing gum composition, which comprises the steps of (1) providing the following ingredients of the chewing gum composition (A) a gum base having an enhanced hydrophilic nature present in an amount from about 40% to about 75%, by weight of the chewing gum composition, (B) a bulking agent present in an amount up to about 60%, by weight of the chewing gum composition, (C) an effective amount of a sweetening agent, and (D) a homogeneous mixture of a hydrophilic polymer present in an amount of at least about 1.5% in an anhydrous carrier, and (2) admixing the ingredients in step (A) to form a uniform mixture, and (3) admixing the ingredients in steps (B), (C) and (D) to the mixture of step (2) to form a uniform mixture.

The gum base having an enhanced hydrophilic nature comprises (a) an elastomer present in an amount from about 0.5% to about 20%, by weight of the gum base, (b) a medium molecular weight polyvinyl acetate polymer having a molecular weight from about 35,000 to about 55,000 present in an amount from about 10% to about 25%, by weight of the gum base, (c) an acetylated monoglyceride present in an amount from about 4.5% to about 10%, by weight of the gum base, (d) a wax having a melting point below about 60° C. present in an amount from about 6% to about 10%, by weight of the gum base, and (e) a material selected from the group consisting of elastomer solvents, emulsifiers, plasticizers, fillers, and mixtures thereof, present in an amount to bring the total amount of gum base to 100%, by weight of the gum base.

The present invention is further illustrated by the following examples which are not intended to limit the effective scope of the claims. All parts and percentages in the examples and throughout the specification and claims are by weight of the final composition unless otherwise specified.

### EXAMPLES 1-3

These examples demonstrate a comparison between reduced-calorie chewing gum compositions containing different levels of the saliva stimulating agent according to the present invention. The gum base composition of examples 1-3 are set out in Table 1.

**TABLE 1**

| GUM BASE COMPOSITION (Percent By Weight) | |
|---|---|
| Ingredient | Examples 1-3 |
| Elastomer | 10.0 |

| Polyvinyl acetate | |
|---|---|
| low molecular weight | 12.0 |
| medium molecular weight | 12.0 |
| Acetylated monoglyceride | 6.5 |
| Wax | 9.0 |
| Glyceryl ester of partially hydrogenated wood resin | 8.0 |
| Partially hydrogenated soybean oil | 9.0 |
| Emulsifier | 8.0 |
| Filler | 25.5 |

The chewing gum compositions of examples 1-3 are set out in Table 2.

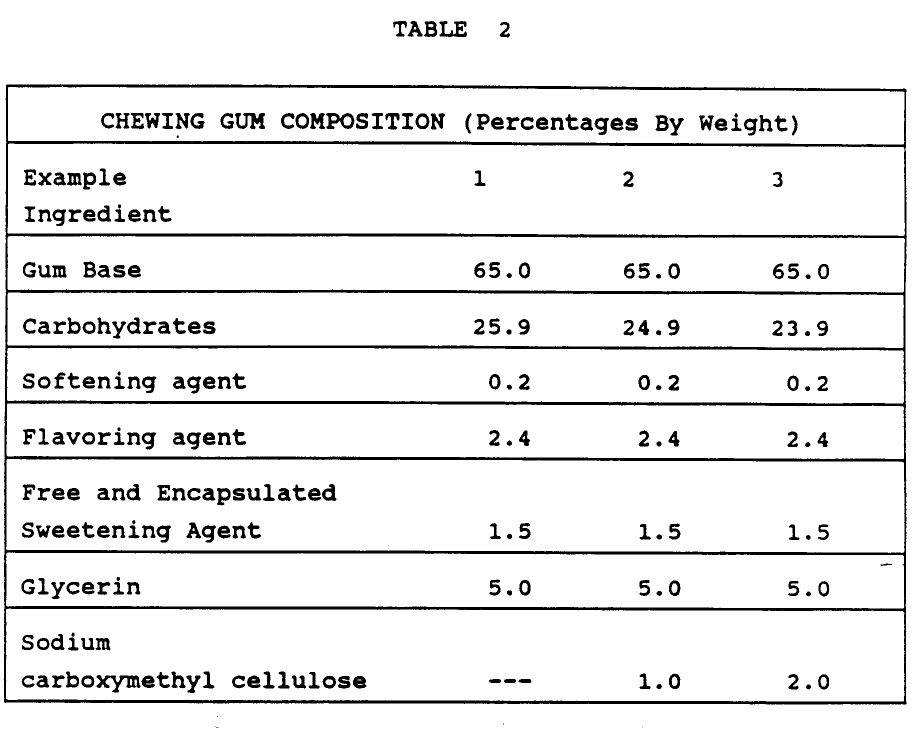

The gum compositions were prepared by first melting the gum base and then admixing the softening agent with the base. The carbohydrates and flavoring agent were then admixed with the base. The sweetening agent was admixed last with the base maintaining the temperature of the mixture below 48° C. so that the encapsulated sweetening agent would not melt.

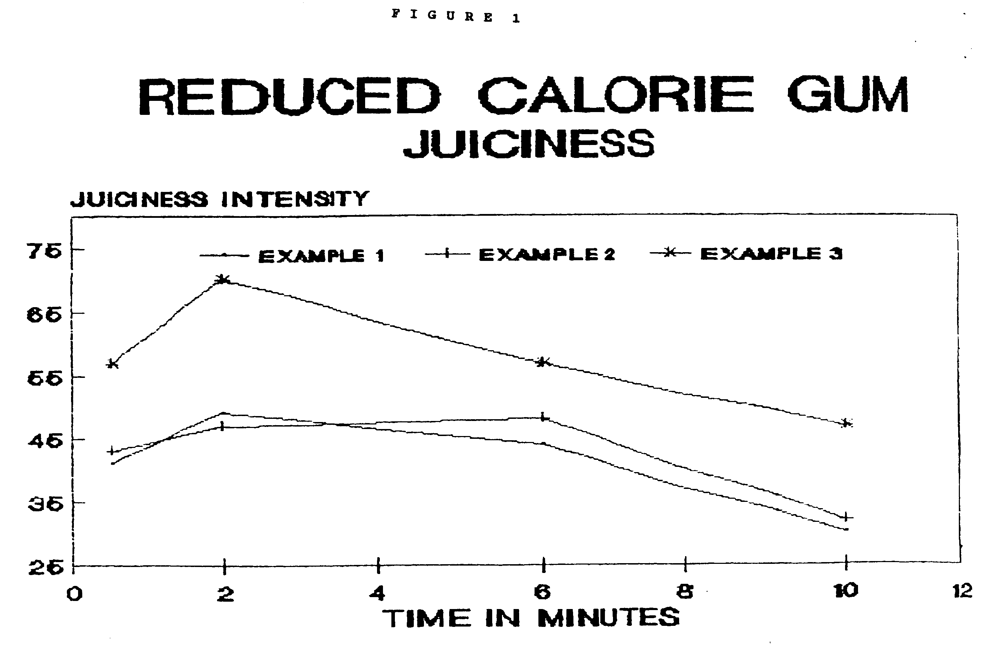

The saliva stimulating properties (juiciness) of the chewing gums of examples 1-3 were judged by an expert panel on an intensity scale of 0 (worst) to 100 (best) after 0.5, 2, 4, 6, and 10 minutes of chewing time. The juiciness intensities of the chewing gums of examples 1-3 are set out graphically in Figure 1. The chewing gum composition of example 1 (no sodium carboxymethyl cellulose) was judged to have a juiciness intensity of 40. The chewing gum composition of example 2 (1% sodium carboxymethyl cellulose in 5% glycerin) was judged to have a juiciness intensity of 40. The chewing gum composition of example 3 (2% sodium carboxymethyl cellulose in 5% glycerin) was judged to have a juiciness intensity of 60.

Accordingly, the reduced-calorie chewing gum composition of example 3, which contained at least 2% sodium carboxymethyl cellulose in 5% glycerin, had greater saliva stimulating properties than the gum compositions of examples 1 and 2 which contained smaller amounts of the sodium carboxymethyl cellulose (0% and 1%, respectively).

### EXAMPLES 4-10

### Noninventive Runs 4-5

### Inventive Runs 6-10

These examples demonstrate a comparison between conventional center-filled chewing gum compositions and center-filled chewing gum compositions prepared according to the present invention having improved stability during storage. The gum base composition of examples 4-5 (controls) and examples 6-10 (test samples) are set out in Table 3.

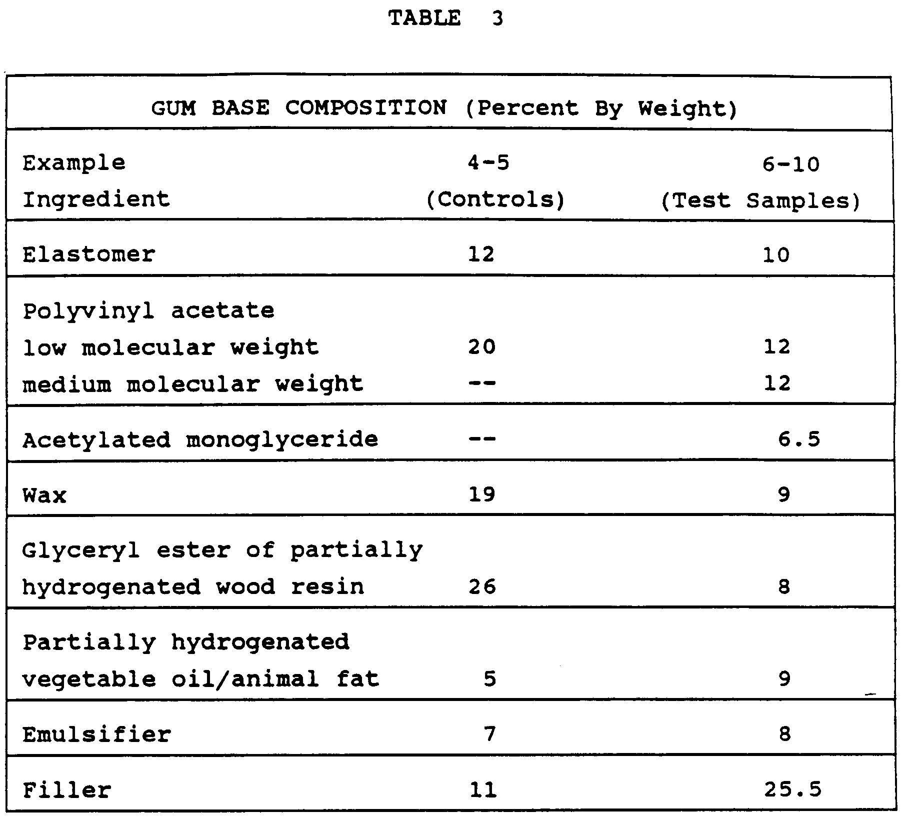

The chewing gum compositions of examples 4-5 (controls) and examples 6-10 (test samples) are set out in Table 4.

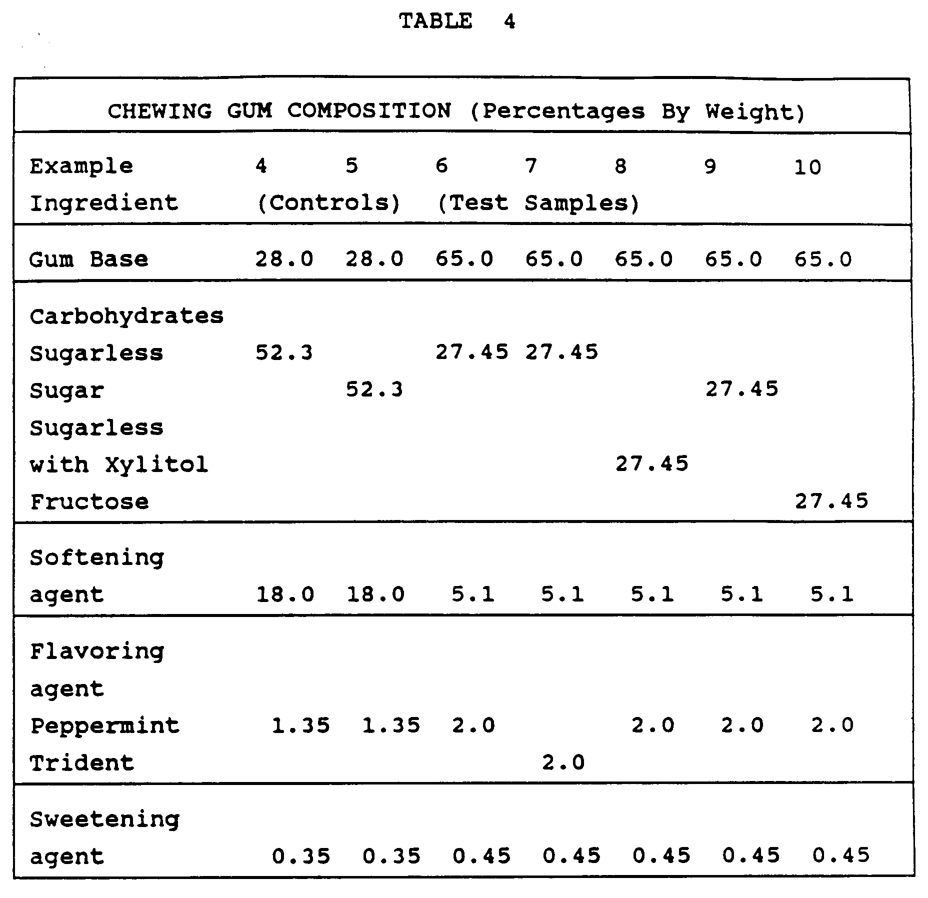

Center-filled chewing gum compositions were prepared incorporating the liquid centers set out in Table 5 and containing the gum base compositions set out in Table 3 and the chewing gum compositions set out in Table 4.

**TABLE 5**

| LIQUID CENTER COMPOSITION (Percentages By Weight) | |
|---|---|
| Example | Ingredients |
| 4 (Control) | 69% Sugarless Humectants and Thickeners |
| | 1% Flavoring Agent |
| | 30% Water |
| 5 (Control) | 59% Sugar Humectants and Thickeners |
| | 1% Flavoring Agent |
| | 40% Water |
| 6 | 100% Lycasin |
| 7 | 100% Glycerin |
| 8 | 100% Water |
| 9 | 69% Sugarless Humectants and Thickeners |
| | 1% Flavoring Agent |
| | 30% Water |
| 10 | 97% Glycerin |
| | 3% Flavoring Agent |

The weight ratio of liquid center to outer shell in the center-filled chewing gum compositions of examples 4-5 (controls) was about 20% and the weight ratio of liquid center to outer shell in the center-filled chewing gum compositions of examples 6-10 (test samples) was about 30%. The center-filled chewing gum compositions of examples 4-10 were stored at 37° C. and observed periodically for stability.

At the end of one week, the centers in all the center-filled chewing gum compositions were stable. At the end of two weeks, the centers in the chewing gum compositions were satisfactory, however, the centers in the chewing gums of examples 4 and 5 (controls) and in example 8 (water center-test sample) were becoming thick. At the end of four weeks, the centers in the chewing gums of examples 4 and 5 (controls) had dried out, the center in example 8 (water center-test sample) was thick, and the centers in the chewing gum compositions of examples 7, 9 and 10 (test samples) were acceptable. At the end of seven weeks, the centers in the chewing gum compositions of examples 6-10 (test samples) showed no further change. At the end of eight weeks, the centers in the chewing gum compositions of examples 6-10 (test samples) still had an acceptable squirt center, even the center in example 8 (water center-test sample) which had become a thick tacky mass. At the end of twelve weeks, the centers in the chewing gum compositions of examples 6-10 (test samples) still had an acceptable squirt center, including the center in the chewing gum of example 8 (water center-test sample).

Accordingly, the center-filled chewing gum compositions of examples 6-10, which contained the inventive gum base composition, were much more stable during storage than the control compositions of examples 4-5.

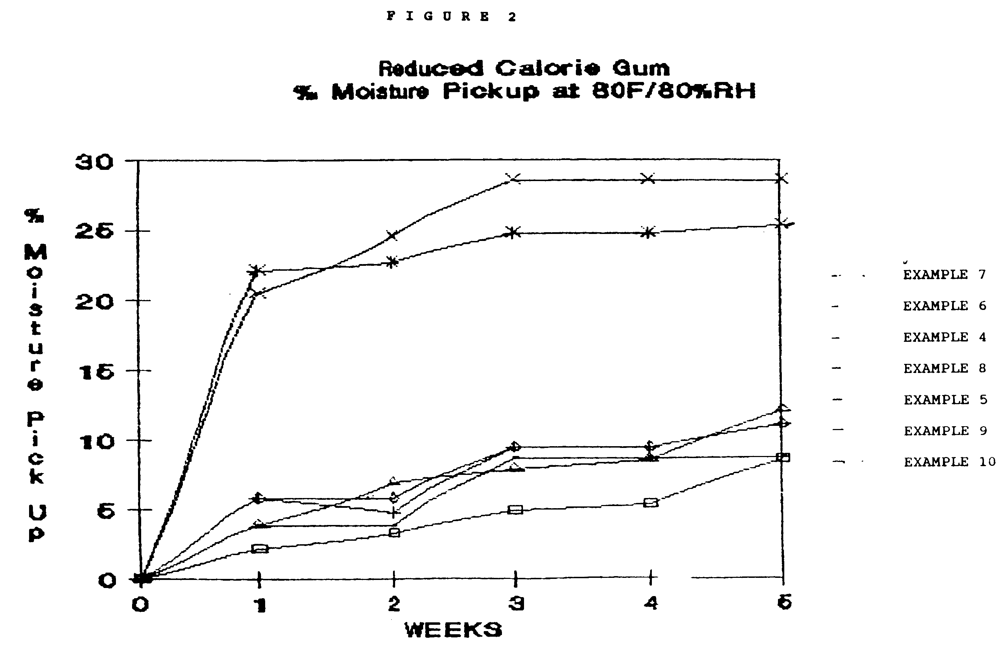

The amount of moisture absorbed by the chewing gum compositions of examples 4-5 (control) and 6-10 (test samples) was measured over a period of six weeks at a temperature of 27° C. and a relative humidity (RH) of 80%. The amount of moisture absorbed by each gum composition, in percentage moisture absorbed by weight versus weeks of storage, is set out in Figure 2. Figure 2 shows that the chewing gum compositions of examples 6-10, which contained the inventive gum base, absorbed significantly less moisture than the conventional chewing gum compositions of examples 4-5.

### EXAMPLES 11-14

These examples demonstrate a comparison between center-filled chewing gum compositions containing different levels of the gum base of the present invention. The composition of the gum base is that set out above for examples 6-10. The chewing gum compositions of examples 11-14 are set out in Table 6.

**TABLE 6**

| CHEWING GUM COMPOSITION (Percentages By Weight) | | | | |
|---|---|---|---|---|
| Ingredient | EXAMPLE | | | |
| | 11 | 12 | 13 | 14 |
| Gum Base | 23 | 26 | 65 | 85 |
| Carbohydrates | 72.55 | 69.55 | 27.45 | 7.45 |
| Softening agent | 19 | 18 | 5.1 | 5.1 |
| Flavoring agent | 2 | 2 | 2 | 2 |
| Sweetening agent | 0.45 | 0.45 | 0.45 | 0.45 |

Center-filled chewing gum compositions were prepared from each chewing gum composition set out in Table 6 (examples 11-14) incorporating each of the liquid centers (examples A-C) set out in Table 7.

**TABLE 7**

| LIQUID CENTER COMPOSITION (Percentages By Weight) | |
|---|---|
| Example | Ingredients |
| A | 69% Sugarless humectants and thickeners |
| | 1% Flavoring agent |
| | 30% Water |
| B | 100% Sorbitol Solution |
| C | 100% Water |

The weight ratio of liquid center to outer shell in the center-filled chewing gum compositions of examples 11-14 was about 30%. The center-filled chewing gum compositions were stored at 37° C. and observed periodically for stability.

At the end of one hour, the center in the gum composition of example 11C (water center-23% gum base) started to migrate. At the end of two hours, the center in the gum composition of example 12C (water center-26% gum base) also started to migrate. At the end of four hours, the center of example 11C (water center-23% gum base) disappeared, the center of example 12C (water center-26% gum base) was almost gone, and the center of example 11B (sorbitol solution center-23% gum base) started to migrate.

At the end of five days, the center of example 12C (water center-26% gum base) had migrated, the centers of examples 12B and 13B (sorbitol solution center-26% gum base and 65% gum base) had started to migrate, the center of example 13C (water center-65% gum base) had started to migrate, and the centers of examples 14B and 14C (sorbitol solution center and water center, respectively-85% gum base) were still acceptable. The centers of examples 11A, 12A, 13A and 14A (69% sugarless humectants and thickeners, 1% flavoring agent and 30% water center) had started to migrate with the center of example 11A (23% gum base) showing greatest migration and the center of example 14A (85% gum base) showing least migration.

At the end of eleven days, only the centers of examples 11A, 12A, 13A and 14A (69% sugarless humectants and thickeners, 1% flavoring agent and 30% water center) were acceptable with the center of example 11A (23% gum base) being very tacky and the center of example 14A (85% gum base) showing only slight migration.

In the remaining samples, an aliquot of the center of the sample was taken and the percent solids of the center was measured using a Bausch & Lomb refractometer. The centers were prepared with an initial percent solids of 72%. As the centers migrate, the percent solids increase.

At the end of one month, the center of example 11A (69% sugarless humectants and thickeners, 1% flavoring agent and 30% water center-23% gum base) was very thick and had a percent solids of 82%. The center of example 14A (69% sugarless humectants and thickeners, 1% flavoring agent and 30% water center-85% gum base) was still fluid and had a percent solids of 72%.

At the end of two months, the center of example 11A (69% sugarless humectants and thickeners, 1% flavoring agent and 30% water center-23% gum base) had migrated significantly and an aliquot could not be taken for analysis of percent solids. The center of example 14A (69% sugarless humectants and thickeners, 1% flavoring agent and 30% water center-85% gum base) was still fluid and had a percent solids of 72%.

At the end of three months, the centers of examples 13A and 14A (69% sugarless humectants and thickeners, 1% flavoring agent and 30% water center-65% gum base and 85% gum base, respectively) were still fluid and each had a percent solids of 74%.

Accordingly, the center-filled chewing gum compositions of examples 13 and 14, which contained higher amounts of the inventive gum base composition (65% and 85%, respectively), were much more stable during storage than the gum compositions of examples 11 and 12 which contained smaller amounts of the gum base (23% and 26%, respectively).

### EXAMPLES 15-17

These examples demonstrate a comparison between a conventional confectionery coated chewing gum and confectionery coated gums prepared according to the present invention. The gum base composition of example 15 (control) and examples 16-17 (test samples) are set out in Table 8.

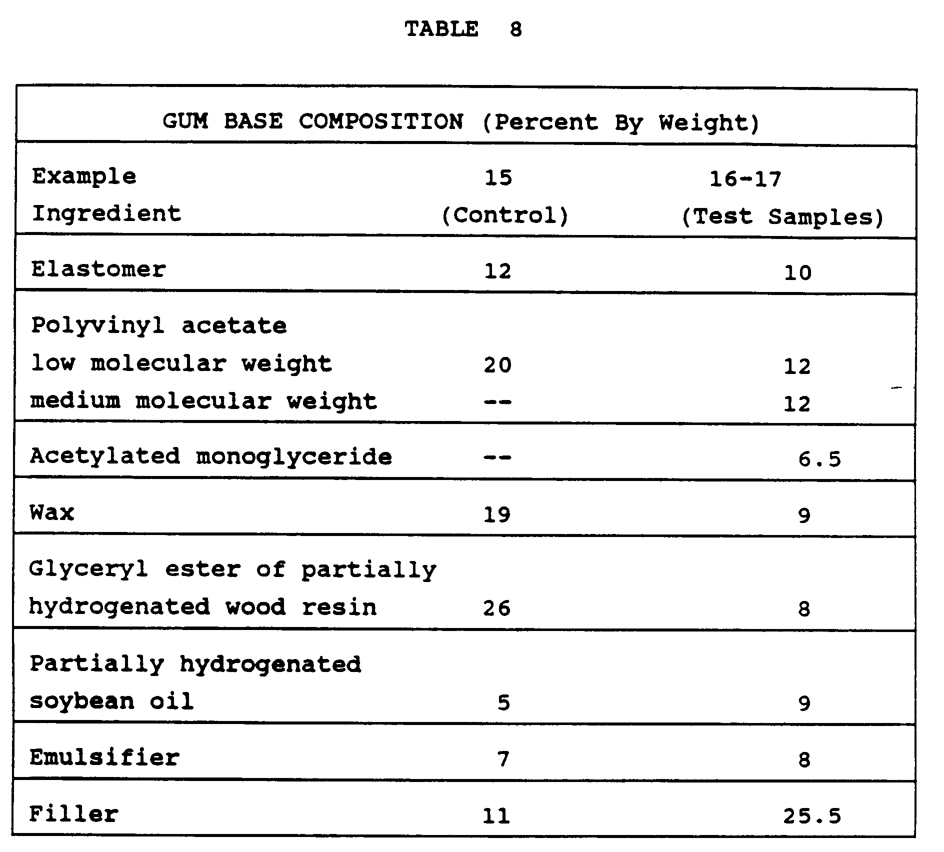

The chewing gum compositions of example 15 (control) and examples 16-17 (test samples) are set out in Table 9.

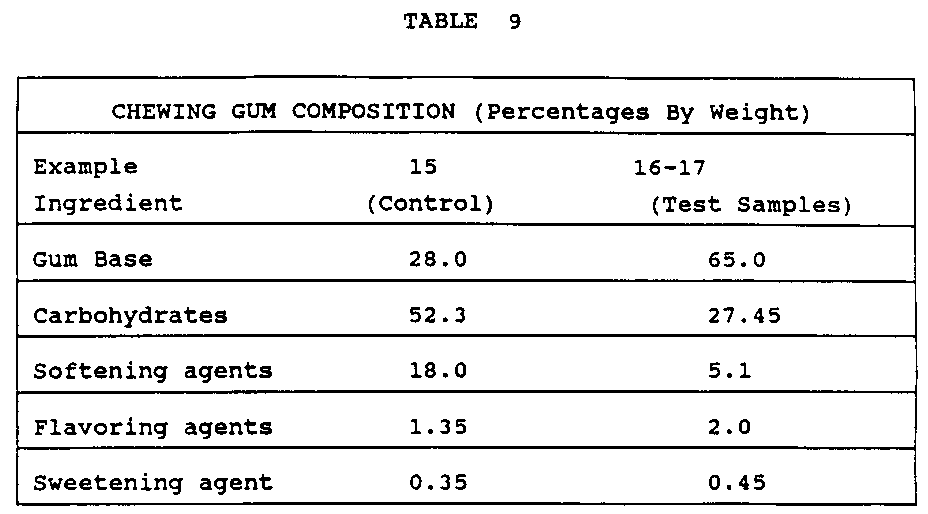

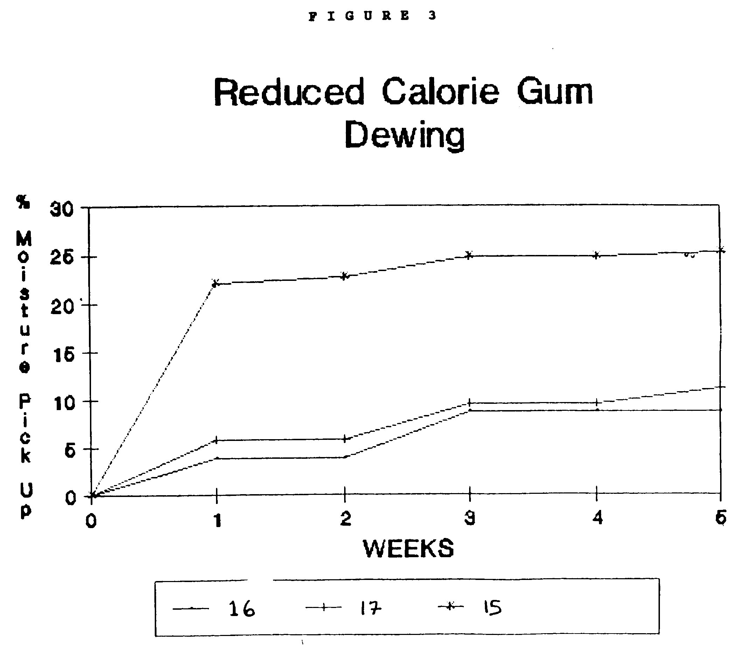

The amount of moisture absorbed by the chewing gum composition of example 15 (control) and examples 16-17 (test samples) was measured over a period of six weeks at a temperature of 27° C. and a relative humidity (RH) of 80%. The amount of moisture absorbed by each gum composition, in percentage moisture absorbed by weight versus weeks of storage, is set out in Figure 3. Figure 3 shows that the chewing gum compositions of examples 16-17, which contained the inventive gum base, absorbed significantly less moisture than the conventional chewing gum composition of example 15.

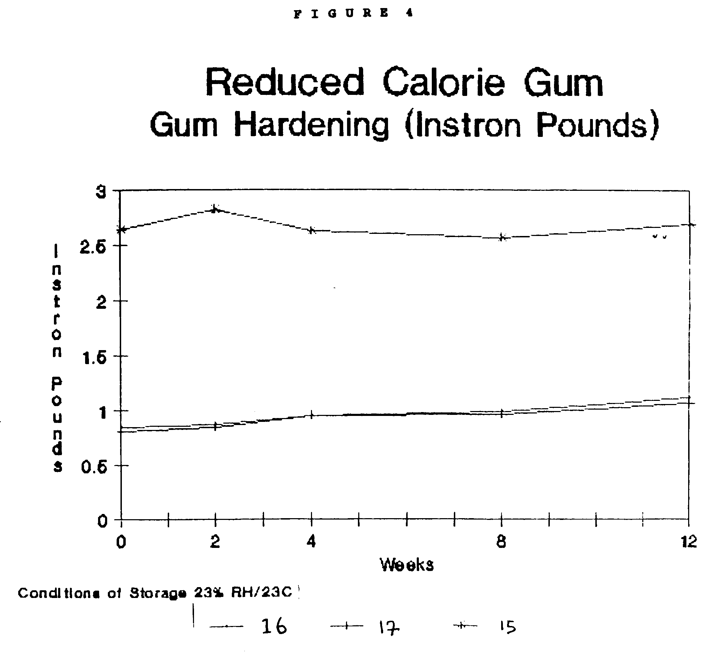

The degree of relative hardness of the chewing gum compositions of example 15 (control) and examples 16-17 (test samples) was measured over a period of five weeks at a temperature of 23° C. and a relative humidity of 23%. Hardness was measured with an Instron Model 1130 durometer having a digital readout from Valtes Associates Inc. A 3/16 inch plunger was pressed against the surface of the gum until the surface was penetrated. The measurements, in pounds versus weeks of storage, are set out in Figure 4. Figure 4 shows that the chewing gum compositions of examples 16-17, which contained the inventive gum base, were significantly softer than the conventional chewing gum composition of example 15.

Accordingly, the confectionery coated chewing gum compositions of examples 16-17, which contained the inventive gum base composition, were much softer and less hygroscopic than the control composition of example 15. Gum centers, containing the inventive softer and more resilient gum base composition, also tolerated the air flow and high temperature conditions (about 34° C.) of the coating process without significant deformation.

The invention being thus described, it will be obvious that the same may be varied in many ways. Such variations are not to be regarded as a departure from the spirit and scope of the invention and all such modifications are intended to be included within the scope of the following claims.

## Claims

1. A reduced-calorie saliva stimulating chewing gum composition which comprises:
(A) a gum base present in an amount from 40% to 75%, by weight of the chewing gum composition, which comprises:
(a) an elastomer present in an amount from 0.5% to 20%, by weight of the gum base;
(b) a medium molecular weight polyvinyl acetate polymer having a molecular weight from 35,000 to 55,000 present in an amount from 10% to 25%, by weight of the gum base;
(c) an acetylated monoglyceride present in an amount from 4.5% to 10%, by weight of the gum base;
(d) a wax having a melting point below 60°C present in an amount from 6% to 10%, by weight of the gum base; and
(e) a material selected from the group consisting of elastomer solvents, emulsifiers, plasticizers, fillers, and mixtures thereof, present in an amount to bring the total amount of gum base to 100%, by weight of the gum base;
(B) a bulking agent present in an amount up to 60%, by weight of the chewing gum composition; and
(C) an effective amount of a sweetening agent; characterised in that the composition further comprises:
(D) a homogeneous mixture of a hydrophilic polymer present in an amount of at least 1.5%, by weight of the chewing gum composition, in an anhydrous carrier, wherein the hydrophilic polymer is selected from the group consisting of cellulose, sodium carboxymethyl cellulose, gum arabic, carrageenan, and mixtures thereof.

2. A composition according to claim 1, wherein the hydrophilic polymer is present in an amount from 1.5% to 10%, by weight of the chewing gum composition.

3. A composition according to claim 1 or 2, wherein the anhydrous carrier is selected from the group consisting of glycerin, propylene glycol, and mixtures thereof, and wherein the anhydrous carrier is present in an amount from 1% to 20%, by weight of the chewing gum composition.

4. A composition according to any of claims 1 to 3, wherein the elastomer is present in an amount from 2.5% to 15%, by weight of the gum base.

5. A composition according to any of claims 1 to 4, wherein the polyvinyl acetate polymer is present in an amount from 12% to 17%, by weight of the gum base.

6. A composition according to any of claims 1 to 5, wherein the acetylated monoglyceride is present in an amount from 5% to 9%, by weight of the gum base.

7. A composition according to any of claims 1 to 6, wherein the wax is present in an amount from 7% to 9.5%, by weight of the gum base.

8. A composition according to any of claims to 7, wherein the hydrophilic polymer in an anhydrous carrier further comprises an organic acid present in an amount from 0.5% to 10%, by weight of the gum composition.

9. A composition according to any of claims 1 to 8, wherein component (e) comprises:
an elastomer solvent in an amount from 2% to 11%, by weight of the gum base;
a plasticizer in an amount from 5% to 14%, by weight of the gum base; and
a filler in an amount of from 15% to 40%, by weight of the gum base.

10. A composition according to any of claims 1 to 9, comprising an outer shell enclosing a cavity and a liquid center within the cavity, wherein the outer shell comprises said composition.

11. A method for preparing a reduced-calorie saliva stimulating chewing gum composition according to claim 1, which comprises the steps of:
(1) providing the following ingredients of the chewing gum composition:
(A) a gum base present in an amount from 40% to 75%, by weight of the chewing gum composition, which comprises:
(a) an elastomer present in an amount from 0.5% to 20%, by weight of the gum base;
(b) a medium molecular weight polyvinyl acetate polymer having a molecular weight from 35,000 to 55,000 present in an amount from 10% to 25%, by weight of the gum base;
(c) an acetylated monoglyceride present in an amount from 4.5% to 10%, by weight of the gum base;
(d) a wax having a melting point below 60°C present in an amount from 6% to 10%, by weight of the gum base; and
(e) a material selected from the group consisting of elastomer solvents, emulsifiers, plasticizers, fillers, and mixtures thereof, present in an amount to bring the total amount of gum base to 100%, by weight of the gum base;
(B) a bulking agent present in an amount up to 60%, by weight of the chewing gum composition;
(C) an effective amount of a sweetening agent; and
(D) a homogeneous mixture of a hydrophilic polymer present in an amount of at least 1.5%, by weight of the chewing gum composition, in an anhydrous carrier, wherein the hydrophilic polymer is selected from the group consisting of cellulose, sodium carboxymethyl cellulose, gum arabic, carrageenan, and mixtures thereof;
(2) admixing the ingredients in step (A) to form a uniform mixture; and
(3) admixing the ingredients in steps (B), (C) and (D) to the mixture of step (2) to form a uniform mixture

## Patentansprüche

1. Kalorienarme speichelstimulierende Kaugummizusammensetzung, umfassend:
(A) eine in einer Menge von 40 Gew.-% bis 75 Gew.-% der Kaugummizusammensetzung vorliegende Gummibase, die umfaßt:
(a) ein in einer Menge von 0,5 Gew.-% bis 20 Gew.-% der Gummibase vorliegendes Elastomer;
(b) ein in einer Menge von 10 Gew.-% bis 25 Gew.-% der Gummibase vorliegendes Polyvinylacetatpolymer mittleren Molekulargewichts mit einem Molekulargewicht von 35.000 bis 55.000;
(c) ein in einer Menge von 4,5 Gew.-% bis 10 Gew.-% der Gummibase vorliegendes acetyliertes Monoglycerid;
(d) ein in einer Menge von 6 Gew.-% bis 10 Gew.-% der Gummibase vorliegendes Wachs mit einen Schmelzpunkt unterhalb von 60°C; und
(e) ein aus der Gruppe, die aus Elastomer-Lösungsmitteln, Emulgatoren, Weichmachern, Füllstoffen und Gemischen davon besteht, ausgewähltes Material, das in einer Menge vorliegt, daß die Gesamtmenge der Gummibase auf 100 Gew.-% der Gummibase gebracht wird;
(B) ein in einer Menge bis zu 60 Gew.-% der Kaugummizusammensetzung vorliegendes Füllmittel; und
(C) eine wirksame Menge eines Süßstoffs; dadurch gekennzeichnet, daß die Zusammensetzung außerdem umfaßt:
(D) ein in einer Menge von mindestens 1,5 Gew.-% der Kaugummizusammensetzung in einem wasserfreien Träger vorliegendes homogenes Gemisch eines hydrophilen Polymers, wobei das hydrophile Polymer aus der Gruppe ausgewählt wird, die aus Cellulose, Natriumcarboxymethylcellulose, Gummi Alabikum, Carrageen und Gemischen davon besteht.

2. Zusammensetzung nach Anspruch 1, wobei das hydrophile Polymer in einer Menge von 1,5 Gew.-% bis 10 Gew.-% der Kaugummizusammensetzung vorliegt.

3. Zusammensetzung nach Anspruch 1 oder 2, wobei der wasserfreie Träger aus der Gruppe ausgewählt wird, die aus Glycerin, Propylenglykol und Gemischen davon besteht, und wobei der wasserfreie Träger in einer Menge von 1 Gew.-% bis 20 Gew.-% der Kaugummizusammensetzung vorliegt.

4. Zusammensetzung nach einem der Ansprüche 1 bis 3, wobei das Elastomer in einer Menge von 2,5 Gew.-% bis 15 Gew.-% der Gummibase vorliegt.

5. Zusammensetzung nach einem der Ansprüche 1 bis 4, wobei das Polyvinylacetatpolymer in einer Menge von 12 Gew.-% bis 17 Gew.-% der Gummibase vorliegt.

6. Zusammensetzung nach einem der Ansprüche 1 bis 5, wobei das acetylierte Monoglycerid in einer Menge von 5 Gew.-% bis 9 Gew.-% der Gummibase vorliegt.

7. Zusammensetzung nach einem der Ansprüche 1 bis 6, wobei das Wachs in einer Menge von 7 Gew.-% bis 9,5 Gew.-% der Gummibase vorliegt.

8. Zusammensetzung nach einem der Ansprüche 1 bis 7, wobei das hydrophile Polymer in einem wasserfreien Träger außerdem eine organische Säure umfaßt, die in einer Menge von 0,5 Gew.-% bis 10 Gew.-% der Gummizusammensetzung vorliegt.

9. Zusammensetzung nach einem der Ansprüche 1 bis 8, wobei Komponente (e) umfaßt: ein Elastomer-Lösungsmittel in einer Menge von 2 Gew.-% bis 11 Gew.-% der Gummibase; einen Weichmacher in einer Menge von 5 Gew.-% bis 14 Gew.-% der Gummibase; und ein Füllmittel in einer Menge von 15 Gew.-% bis 40 Gew.-% der Gummibase.

10. Zusammensetzung nach einem der Ansprüche 1 bis 9, die eine einen Hohlraum und einen flüssigen Innenteil innerhalb des Hohlraums umfassende Außenhülle enthält, wobei die Außenhülle die Zusammensetzung umfaßt.

11. Verfahren zur Herstellung einer kalorienarmen speichelstimulierenden Kaugummizusammensetzung nach Anspruch 1, das die Schritte umfaßt:
(1) Bereitstellen der folgenden Bestandteile der Kaugummizusammensetzung:
(A) eine in einer Menge von 40 Gew.-% bis 75 Gew.-% der Kaugummizusammensetzung vorliegende Gummibase, die umfaßt:
(a) ein in einer Menge von 0,5 Gew.-% bis 20 Gew.-% der Gummibase vorliegendes Elastomer;
(b) ein in einer Menge von 10 Gew.-% bis 25 Gew.-% der Gummibase vorliegendes Polyvinylacetatpolymer mittleren Molekulargewichts mit einem Molekulargewicht von 35.000 bis 55.000,
(c) ein in einer Menge von 4,5 Gew.-% bis 10 Gew.-% der Gummibase vorliegendes acetyliertes Monoglycerid,
(d) ein in einer Menge von 6 Gew.-% bis 10 Gew.-% der Gummibase vorliegendes Wachs mit einem Schmelzpunkt unterhalb von 60°C; und
(e) ein aus der Gruppe, die aus Elastomer-Lösungsmitteln, Emulgatoren, Weichmachern, Füllstoffen und Gemischen davon besteht, ausgewähltes Material, das in einer Menge vorliegt, daß die Gesamtmenge der Gummibase auf 100 Gew.-% der Gummibase gebracht wird;
(B) ein in einer Menge bis zu 60 Gew.-% der Kaugummizusammensetzung vorliegendes Füllmittel;
(C) eine wirksame Menge eines Süßstoffs; und
(D) ein in einer Menge von mindestens 1,5 Gew.-% der Kaugummizusammensetzung in einem wasserfreien Träger vorliegendes homogenes Gemisch eines hydrophilen Polymers, wobei das hydrophile Polymer aus der Gruppe ausgewählt wird, die aus Cellulose, Natriumcarboxymethylcellulose, Gummi Arabikum, Carrageen und Gemischen davon besteht;
(2) Mischen der Bestandteile von Schritt (A) zur Bildung eines einheitlichen Gemisches; und
(3) Zumischen der Bestandteile von Schritten (B), (C) und (D) zu dem Gemisch von Schritt (2) zur Bildung eines einheitlichen Gemisches.

## Revendications

1. Composition de gomme à mâcher stimulant la salivation, basse calories, qui comprend:
(A) une base de gomme présente à raison de 40 % à 75 % en poids de la composition de gomme à mâcher, qui comprend:
(a) un élastomère présent à raison de 0,5 % à 20 % en poids de la base de gomme ;
(b) un polymère de poly-(acétate de vinyle) de poids moléculaire moyen, présentant un poids moléculaire compris entre 35 000 et 55 000, présent à raison de 10 à 25 % en poids de la base de gomme ;
(c) un monoglycéride acétylé présent à raison de 4,5 % à 10 % en poids de la base de gomme ;
(d) une cire ayant un point de fusion inférieur à 60°C, présente à raison de 6 % à 10 % en poids de la base de gomme ; et
(e) une substance choisie dans le groupe consistant en solvants d'élastomère, émulsifiants, plastifiants, charges et leurs mélanges, présente en une quantité telle qu'elle complète la quantité totale de la base de gomme à 100 % en poids de la base de gomme ;
(B) un agent de charge présent en une quantité pouvant atteindre 60 % en poids de la composition de gomme à mâcher ; et
(C) une quantité efficace d'un agent édulcorant; caractérisée en ce que la composition renferme en outre:
(D) un mélange homogène d'un polymère hydrophile présent à raison d'au moins. 1,5 % en poids de la composition de gomme à mâcher, dans un support anhydre, dans lequel le polymère hydrophile est choisi dans le groupe consistant en cellulose, carboxyméthylcellulose sodique, gomme arabique, carrageenane et leurs mélanges.

2. Une composition selon la revendication 1, dans laquelle le polymère hydrophile est présent à raison de 1,5 % à 10 % en poids de la composition de gomme à mâcher.

3. Une composition selon la revendication 1 ou 2, dans laquelle le support anhydre est choisi dans le groupe consistant en glycérine, propylèneglycol et leurs mélanges, et dans laquelle le support anhydre est présent à raison de 1 % à 20 % du poids de la composition de gomme à mâcher.

4. Une composition selon l'une quelconque des revendications 1 à 3, dans laquelle l'élastomère est présent à raison de 2,5 % à 15 % en poids de la base de gomme.

5. Une composition selon l'une quelconque des revendications 1 à 4, dans laquelle le polymère de poly-(acétate de vinyle) est présent à raison de 12 % à 17 % en poids de la base de gomme.

6. Une composition selon l'une quelconque des revendications 1 à 5, dans laquelle le monoglycéride acétylé est présent à raison de 5 % à 9 % en poids de la base de gomme.

7. Une composition selon l'une quelconque des revendications 1 à 6, dans laquelle la cire est présente à raison de 7 % à 9,5 % en poids de la base de gomme.

8. Une composition selon l'une quelconque des revendications 1 à 7, dans laquelle le polymère hydrophile dans un support anhydre comprend en outre un acide organique présent à raison de 0,5 % à 10 % en poids de la composition de la gomme.

9. Une composition selon l'une quelconque des revendications 1 à 8, dans laquelle le constituant (e) comprend:
- un solvant d'élastomère à raison de 2 % à 11 % en poids de la base de gomme ;
- un plastifiant à raison de 5 % à 14 % en poids de la base de gomme ; et
- une charge à raison de 15 % à 40 % en poids de la base de gomme.

10. Une composition selon l'une quelconque des revendications 1 à 9, comprenant une enveloppe externe entourant une cavité et un centre liquide à l'intérieur de la cavité, dans laquelle l'enveloppe externe comprend ladite composition.

11. Un procédé de préparation d'une composition de gomme à mâcher stimulant la salivation, basse calories, selon la revendication 1, qui comprend les étapes de:
(1) apport des ingrédients suivants de la composition de gomme à mâcher:
(A) une base de gomme présente à raison de 40 % à 75 % en poids de la composition de gomme à mâcher, qui comprend:
(a) un élastomère présent à raison de 0,5 % à 20 % en poids de la base de gomme ;
(b) un polymère de poly-(acétate de vinyle) de poids moléculaire moyen, présentant un poids moléculaire de 35 000 à 55 000, présent à raison de 10 % à 25 % en poids de la base de gomme ;
(c) un monoglycéride acétylé présent à raison de 4,5 % à 10 % en poids de la base de gomme ;
(d) une cire présentant un point de fusion inférieur à 60°C, présente à raison de 6 % à 10 % en poids de la base de gomme; et
(e) une substance choisie dans le groupe consistant en solvants d'élastomère, émulsifiants, plastifiants, charges, et leurs mélanges, présente en quantité suffisante pour amener la quantité totale de base de gomme à 100 % en poids de la base de gomme;
(B) un agent de charge présent en une quantité pouvant atteindre 60 % en poids de la composition de gomme à mâcher ;
(C) une quantité efficace d'un agent édulcorant; et
(D) un mélange homogène d'un polymère hydrophile présent à raison d'au moins 1,5 % en poids de la composition de gomme à mâcher, dans un support anhydre, dans lequel le polymère hydrophile est choisi parmi le groupe consistant en cellulose, carboxyméthylcellulose sodique, gomme arabique, carrageenane ainsi que leurs mélanges ;
(2) mélange des ingrédients de l'étape (A) pour former un mélange uniforme ; et
(3) mélange des ingrédients des étapes (B), (C) et (D) au mélange de l'étape (2) pour former un mélange uniforme.
